# EUROPÄISCHE PATENTSCHRIFT

(11) **EP 0 970 837 B1**
(45) Veröffentlichungstag und Bekanntmachung des Hinweises auf die Patenterteilung: **30.07.2003**
(21) Anmeldenummer: 99109783.3
(22) Anmeldetag: 18.05.1999
(51) Int. Cl.: B60K 6/02

(54) **Hybridfahrantrieb für schwere Rad- und Kettenfahrzeuge**
Hybrid propulsion unit for heavy track- or wheel-driven vehicles
Ensemble de transmission hybride pour véhicules lourds à chenilles ou à roues

(30) Priorität: 19.05.1998 DE 19822528
(43) Veröffentlichungstag der Anmeldung: 12.01.2000
(73) Patentinhaber: Rheinmetall Landsysteme GmbH, 24159 Kiel (DE)
(72) Erfinder: Schallehn, Hans-Georg, 34266 Niestetal (DE)

(56) Entgegenhaltungen:
- EP-A- 0 362 834
- WO-A-97/08008
- DE-A- 2 203 319
- DE-A- 4 421 785
- DE-C- 19 729 033

## Beschreibung

Die Erfindung betrifft einen Fahrantrieb für Rad- und Kettenfahrzeuge, vorzugsweise großer Masse, mit einem Antriebsmotor, insbesondere einem Verbrennungsmotor, und einem vom Antriebsmotor angetriebenen Generator gemäß Oberbegriff des Anspruchs 1.

Zum Antrieb von Straßenfahrzeugen sind Antriebskonzepte bekannt, bei denen eine elektrische Kraftübertragung verwirklicht wird. Die Kopplung zwischen dem Generator und den Antriebsrädern des Fahrzeuges erfolgt dabei allein durch elektrische Bauelemente, die mechanische Baugruppen, wie Getriebe, Kardanwellen, Achsdifferentiale und dgl. ersetzen.

Um elektrisch angetriebene Fahrzeuge abzubremsen, werden mechanisch wirkende Bremsen im Bedarfsfall durch Zusatzbremssysteme ergänzt. So ist bekannt, hierfür im Betriebszustand eines Generators befindliche Fahrmotore, die die gelieferte Energie an einen elektrischen Verbraucher abgeben, zu nutzen. Als elektrische Verbraucher können elektrische Widerstände, Batterien oder dgl. eingesetzt werden, mit denen infolge hohen Volumenbedarfs, aufwendiger Kühlmaßnahmen bzw. begrenzter Kapazität eine ausreichende Bremskrafterhöhung nicht erzielt werden kann.

Insbesondere bei größeren Geschwindigkeiten ist daher eine entsprechende Entlastung der mechanischen Bremsen nicht möglich, so daß es an diesen zu einer unzulässigen Erwärmung kommen kann, die möglicherweise zum Ausfall der mechanischen Bremsen führt. Ein hohes Risiko für einen solchen Störfall ergibt sich bei Fahrzeugen großer Masse, wie etwa Fahrzeugen für den Personen- oder Gütertransport.

Der Erfindung liegt daher die Aufgabe zugrunde, einen elektrischen Fahrantrieb derart weiterzuentwickeln, daß dieser bei Einsatz an Fahrzeugen großer Masse eine hinreichende Entlastung der mechanischen Bremssysteme auch bei höheren Geschwindigkeiten bietet.

Erfindungsgemäß ist hierfür ein Fahrantrieb mit den Merkmalen des Anspruchs 1 gekennzeichnet durch eine Umschalteinrichtung zur Änderung der Betriebsweise des Generators, die derart wirkt, daß der Generator als Motor betrieben werden kann, durch eine Kupplung zur Unterbrechung des Kraftflusses vom Antriebsmotor zum als Motor betriebenen Generator, und durch einen Bremsenergieaufnehmer, von dem zumindest ein Teil der Energie, die von dem als Generator geschalteten Fahrmotor ausgeht und an den im Betriebszustand als Motor befindlichen Generator abgegeben wird, in Bremswirkung umsetzbar ist.

Die Erfindung ist mit dem Vorteil verbunden, daß auch an Fahrzeugen großer Masse die mechanischen Bremssysteme derart ergänzt werden können, daß eine Überlastung dieser auch bei größeren Geschwindigkeiten sicher ausgeschlossen und eine ausreichende Gesamtbremswirkung erzielt wird.

In bevorzugter Ausführung der Erfindung ist der Bremsenergieaufnehmer als hydrodynamischer Retarder ausgebildet. Er kann bevorzugt zumindest zu einem Teil seines Innenvolumens ständig mit Flüssigkeit gefüllt sein, wodurch seine Aktivierung unmittelbar nach Einleitung des Bremsvorgangs ermöglicht wird.

In Ausgestaltung dieser Ausführung weist der hydrodynamische Retarder einen gehäusefesten Stator und einen Rotor auf, der mit der Abtriebswelle des als Motor betriebenen Generators über eine Kupplung in Wirkverbindung steht.

Alternativ hierzu besteht die Möglichkeit, daß der hydrodynamische Retarder zwei Rotoren aufweist, von denen der erste Rotor über eine Kupplung mit der Abtriebswelle des Antriebsmotors und der zweite Rotor mit der Abtriebswelle des als Motor betriebenen Generators über eine weitere Kupplung in Wirkverbindung steht.

Weiterhin kann eine Regeleinrichtung vorgesehen sein, die der Einstellung und Regelung der Drehzahl des ersten und/oder zweiten Rotors des Retarders dient. Die Regelung erfolgt dabei über den Antriebsmotor bzw. über den als Motor betriebenen Generator. Es besteht aber auch die Möglichkeit, die Rotoren des Retarders direkt anzutreiben und zu regeln und die Kopplung mit dem als Motor betriebenen Generator und gegebenenfalls mit dem Antriebsmotor bei einer vorwählbaren, von dem Betriebsverhalten des Retarders und der erforderlichen Bremswirkung abhängigen Drehzahl und Drehrichtung des jeweiligen Rotors vorzusehen.

Zur Erzielung einer dosierten Bremswirkung auch bei geringer Fahrgeschwindigkeit erfolgt die Einstellung und Regelung der Drehzahl und/oder Drehrichtung des einen Rotors des Retarders in Abhängigkeit von der Drehzahl und/oder Drehrichtung des anderen Rotors.

In weiterer Ausgestaltung der Erfindung wird für eine Optimierung der Bremswirkung die Drehzahl und/oder Drehrichtung mindestens eines Rotors des Retarders in Abhängigkeit von der Drehzahl der Abtriebswelle des Antriebsmotors vorgewählt.

Zur Erzielung von hohen Bremskräften besteht die Möglichkeit, die Rotoren des Retarders mit gegenläufiger Drehrichtung zu betreiben. Weiterhin ist es zweckmäßig, die Drehzahl und Drehrichtung des als Motor betriebenen Generators in Abhängigkeit von der erforderlichen Bremswirkung zu steuern.

Die Erfindung soll nachfolgend anhand eines Ausführungsbeispiels näher erläutert werden.

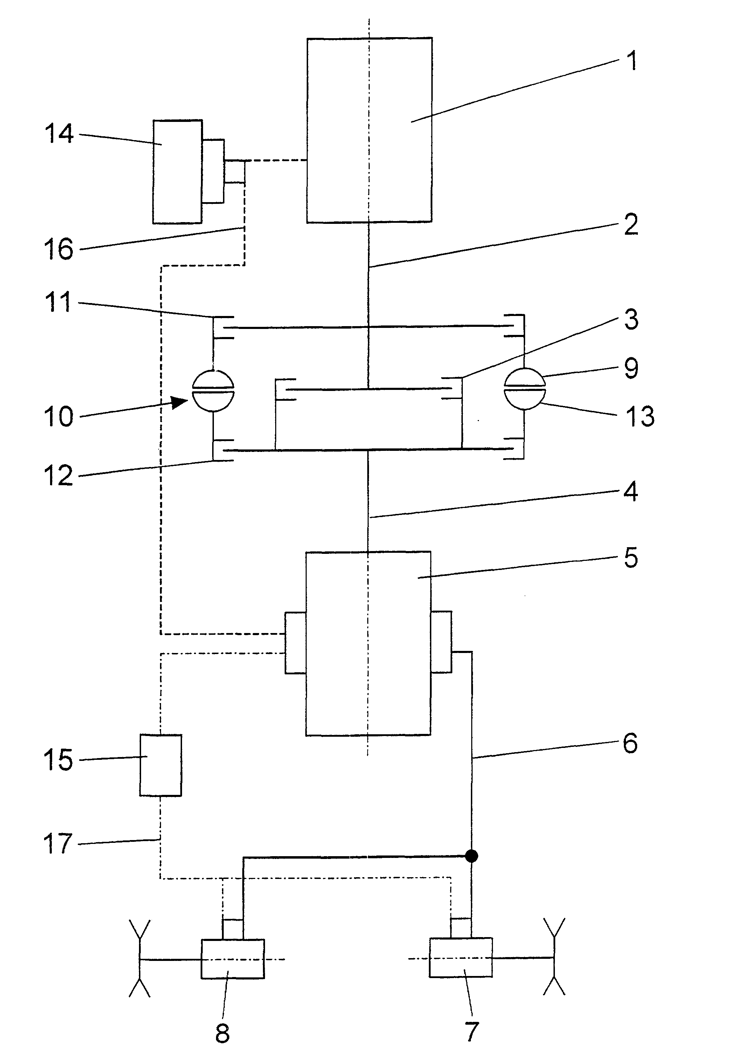

Wie aus der beigefügten Zeichnung hervorgeht, ist ein Verbrennungsmotor 1 über eine Abtriebswelle 2, eine Kupplung 3 und eine Antriebswelle 4 mit einem Generator 5 verbunden. Vom Generator 5 führen elektrische Leitungen 6 zu den Fahrmotoren 7 und 8.

Mit der Abtriebswelle 2 ist ein erster Rotor 9 eines Retarders 10 über eine Kupplung 11 kraftschlüssig verbindbar. Eine weitere Kupplung 12 ist zwischen einem zweiten Rotor 13 des Retarders 10 und dem Generator 5 angeordnet.

Zur Steuerung der Drehzahlen der Rotoren 9 und 13 ist eine Regeleinrichtung 14 mit zum Verbrennungsmotor 1 und zum Generator 5 führenden Steuerleitungen 16 vorgesehen. Mit ihr werden die Relativdrehzahlen der Rotoren 9 und 13 zueinander sowie relativ zur Drehzahl der Abtriebswelle 2 des Verbrennungsmotors 1 im Hinblick auf eine effiziente Betriebsweise des Retarders 10 und die angestrebte Bremswirkung gesteuert.

Im Fahrbetrieb erfolgt die Kraftübertragung vom Verbrennungsmotor 1 über die geschlossene Kupplung 3 auf den Generator 5, der die elektrische Energie für die Fahrmotoren 7 und 8 liefert.

Zur Einleitung eines Bremsvorgangs wird über die Kupplung 3 der Kraftfluß vom Verbrennungsmotor 1 auf den Generator 5 unterbrochen. Gleichzeitig werden die Kupplungen 11 und 12 geschlossen, wodurch eine drehfeste Verbindung zwischen dem ersten Rotor 9 und dem Verbrennungsmotor 1 sowie zwischen dem zweiten Rotor 13 und dem als Motor betriebenen Generator 5 hergestellt wird. Die Änderung der Betriebsweise des Generators 5 als Motor sowie der Fahrmotoren 7 und 8 als Generatoren erfolgt über die Umschalteinrichtung 15, die über Datenleitungen 17 mit dem Generator 5 und den Fahrmotoren 7 und 8 verbunden ist. Um unmittelbar nach dem Umschalten eine Bremswirkung zu erzielen, ist der Retarder 10 zumindest zu einem Teil seines Innenvolumens ständig mit Flüssigkeit gefüllt. Über die Flüssigkeitsmenge im Retarder 10 und die Relativdrehzahlen der Rotoren 9 und 13 zueinander wird die Bremswirkung den jeweiligen Anforderungen angepaßt.

## Patentansprüche

1. Fahrantrieb für Rad- und Kettenfahrzeuge, vorzugsweise großer Masse, mit einem Antriebsmotor, insbesondere einem Verbrennungsmotor, einem vom Antriebsmotor (1) angetriebenen Generator (5), mindestens einem elektrischen Fahrmotor (7 bzw. 8) und einer Steuer- bzw. Regeleinheit (14) zur definierten Übertragung der vom Generator erzeugten Leistung auf den Fahrmotor, **gekennzeichnet durch** eine Umschalteinrichtung (15) zur Änderung der Betriebsweise des Generators (5), die derart wirkt, daß der Generator (5) als Motor betrieben werden kann, **durch** eine Kupplung (3) zur Unterbrechung des Kraftflusses vom Antriebsmotor (1) zum als Motor betriebenen Generator (5), und **durch** einen Bremsenergieaufnehmer (10), von dem zumindest ein Teil der Energie, die von dem als Generator geschalteten Fahrmotor (7, 8) ausgeht und an den im Betriebszustand als Motor befindlichen Generator (5) abgegeben wird, in Bremswirkung umsetzbar ist.

2. Fahrantrieb nach Anspruch 1, **dadurch gekennzeichnet, daß** der Bremsenergieaufnehmer als hydrodynamischer Retarder (10) ausgebildet ist.

3. Fahrantrieb nach Anspruch 2, **dadurch gekennzeichnet, daß** der hydrodynamische Retarder (10) zumindest zu einem Teil seines Innenvolumens ständig mit Flüssigkeit gefüllt ist.

4. Fahrantrieb nach Anspruch 2 oder 3, **dadurch gekennzeichnet, daß** der hydrodynamische Retarder (10) einen gehäusefesten Stator und einen Rotor (13) aufweist, der mit der Abtriebswelle des als Motor betriebenen Generators (5) über eine Kupplung (12) in Wirkverbindung steht.

5. Fahrantrieb nach Anspruch 2 oder 3, **dadurch gekennzeichnet, daß** der hydrodynamische Retarder (10) zwei Rotoren (9, 13) aufweist, von denen der erste Rotor (9) über eine Kupplung (11) mit der Abtriebswelle (2) des Antriebsmotors (1) und der zweite Rotor (13) mit der Abtriebswelle des als Motor betriebenen Generators (5) über eine weitere Kupplung (12) in Wirkverbindung steht.

6. Fahrantrieb nach Anspruch 1, **dadurch gekennzeichnet, daß** eine Regeleinrichtung (14) vorgesehen ist, die der Einstellung und Regelung der Drehzahl des ersten und/oder zweiten Rotors (9, 13) des Retarders (10) dient.

7. Fahrantrieb nach Anspruch 6, **dadurch gekennzeichnet, daß** zur Erzielung einer dosierten Bremswirkung auch bei geringer Fahrgeschwindigkeit die Einstellung und Regelung der Drehzahl und/oder der Drehrichtung des einen Rotors (9) des Retarders (10) in Abhängigkeit von der Drehzahl und/oder Drehrichtung des anderen Rotors (13) erfolgt.

8. Fahrantrieb nach Anspruch 6, **dadurch gekennzeichnet, daß** für eine Optimierung der Bremswirkung die Einstellung und Regelung der Drehzahl und/oder Drehrichtung mindestens eines Rotors (9, 13) des Retarders (10) in Abhängigkeit von der Drehzahl der Abtriebswelle (2) des Antriebsmotors (1) erfolgt.

## Claims

1. A drive mechanism for wheeled and tracked vehicles, preferably of large mass, comprising a propulsion engine, in particular an internal combustion engine, a generator (5) driven by the propulsion engine (1), at least one electric drive motor (7; 8) and a control unit (14) for the defined transmission of the power generated by the generator to the drive motor, **characterised by** a switch-over arrangement (15) for changing the operating mode of the generator (5), which switch-over arrangement (15) acts in such a way that the generator (5) can be operated as a motor, by a clutch (3) for interrupting the power flow from the propulsion engine (1) to the generator (5) operated as a motor, and by a braking energy absorbing element (10) by which at least a part of the energy which issues from the drive motor (7, 8) when switched to operate as a generator and is supplied to the generator (5) in its operating mode as a motor, is convertible into a braking effect.

2. Drive mechanism according to Claim 1, **characterised in that** the braking energy absorbing element takes the form of a hydrodynamic retarder (10).

3. Drive mechanism according to Claim 2, **characterised in that** the internal volume of the hydrodynamic retarder (10) is continuously filled at least partially with liquid.

4. Drive mechanism according to Claim 2 or 3, **characterised in that** the hydrodynamic retarder (10) has a stator mounted to its housing and a rotor (13) which is operatively connected to the output shaft of the generator (5) operating as a motor via a clutch (12).

5. Drive mechanism according to Claim 2 or 3, **characterised in that** the hydrodynamic retarder (10) has two rotors (9, 13), the first rotor (9) of which is operatively connected to the output shaft (2) of the propulsion engine (1) via a clutch (11) and the second rotor (13) of which is operatively connected to the output shaft of the generator (5) operating as a motor via a further clutch (12).

6. Drive mechanism according to Claim 1, **characterised in that** a control arrangement (14) is provided which serves to adjust and control the rotational speed of the first and/or second rotor (9, 13) of the retarder (10).

7. Drive mechanism according to Claim 6, **characterised in that** to achieve a metered braking effect even at low driving speed the rotational speed and/or the direction of rotation of the one rotor (9) of the retarder (10) is/are adjusted and controlled as a function of the rotational speed and/or direction of rotation of the other rotor (13).

8. Drive mechanism according to Claim 6, **characterised in that** for optimisation of the braking effect the rotational speed and/or direction of rotation of at least one rotor (9, 13) of the retarder (10) is/are adjusted and controlled as a function of the rotational speed of the output shaft (2) of the propulsion engine (1).

## Revendications

1. Mécanisme de propulsion pour véhicules à roues et à chenilles, de préférence de grande masse, comportant un moteur d'entraînement, en particulier un moteur à combustion interne, un générateur (5) entraîné par le moteur d'entraînement (1), au moins un moteur de marche électrique (7 ou 8) et une unité de commande ou de régulation (14) pour la transmission définie au moteur de marche de la puissance produite par le générateur, **caractérisé par** un dispositif de commutation (15) pour modifier le mode de fonctionnement du générateur (5) qui agit de manière que le générateur (5) puisse fonctionner comme moteur par un accouplement (3) pour interrompre le flux des forces du moteur d'entraînement (1) au générateur (5) fonctionnant comme moteur, et par un capteur d'énergie de freinage (10) dont au moins une partie de l'énergie, qui provient du moteur de marche (7, 8) couplé en tant que générateur et qui est délivrée au générateur (5) se trouvant en mode de fonctionnement en moteur, peut être convertie en action de freinage.

2. Mécanisme de propulsion selon la revendication 1, **caractérisé en ce que** le capteur d'énergie de freinage est réalisé sous la forme d'un retardateur (10) hydrodynamique.

3. Mécanisme de propulsion selon la revendication 2, **caractérisé en ce que** le retardateur (10) hydrodynamique est rempli en permanence avec un liquide, au moins pour une partie de son volume intérieur.

4. Mécanisme de propulsion selon la revendication 2 ou 3, **caractérisé en ce que** le retardateur (10) hydrodynamique comporte un stator solidaire du carter et un rotor (13) qui est en liaison active, par l'intermédiaire d'un accouplement (12), avec l'arbre de sortie du générateur (5) fonctionnant comme moteur.

5. Mécanisme de propulsion selon la revendication 2 ou 3, **caractérisé en ce que** le retardateur (10) hydrodynamique comporte deux rotors (9, 13) dont le premier rotor (9) est en liaison active, par un accouplement (11), avec l'arbre de sortie (2) du moteur d'entraînement, et le deuxième rotor (13) est en liaison active, par un autre accouplement (12), avec l'arbre de sortie du générateur (5) fonctionnant comme moteur.

6. Mécanisme de propulsion selon la revendication 1, **caractérisé en ce qu'**il est prévu un dispositif de régulation (14) qui sert au réglage et à la régulation de la vitesse de rotation du premier et/ou du deuxième rotor (9, 13) du retardateur (10).

7. Mécanisme de propulsion selon la revendication 6, **caractérisé en ce que** pour obtenir un effet de freinage dosé, même à faible vitesse de marche, le réglage et la régulation de la vitesse de rotation et/ou du sens de rotation d'un rotor (9) du retardateur (10) s'effectuent en fonction de la vitesse de rotation et/ou du sens de rotation de l'autre rotor (13).

8. Mécanisme de propulsion selon la revendication 6, **caractérisé en ce que** pour optimiser l'effet de freinage, le réglage et la régulation de la vitesse de rotation et/ou du sens de rotation d'au moins un rotor (9, 13) du retardateur (10) s'effectuent en fonction de la vitesse de rotation de l'arbre de sortie (2) du moteur d'entraînement (1).
